# EUROPÄISCHE PATENTSCHRIFT

(11) **EP 2 137 403 B1**
(45) Veröffentlichungstag und Bekanntmachung des Hinweises auf die Patenterteilung: **04.01.2012**
(21) Anmeldenummer: 08708439.8
(22) Anmeldetag: 30.01.2008
(51) Int. Cl.: F02M 61/16, F02M 47/02, F02M 63/00, F16F 1/02

(54) **FEDERHÜLSE FÜR KRAFTSTOFFINJEKTOR**
SPRING SLEEVE FOR FUEL INJECTOR
DOUILLE ÉLASTIQUE POUR INJECTEUR DE CARBURANT

(30) Priorität: 14.03.2007 DE 102007012302
(43) Veröffentlichungstag der Anmeldung: 30.12.2009
(73) Patentinhaber: Robert Bosch GmbH, 70442 Stuttgart (DE)
(72) Erfinder: UHLMANN, Dietmar, 71404 Korb (DE); LOUTRAGE, Jean-Luc, 70469 Stuttgart (DE)
(86) Internationale Anmeldenummer: PCT/EP2008/051124
(87) Internationale Veröffentlichungsnummer: WO 2008/110409

(56) Entgegenhaltungen:
- EP-A- 1 605 159
- DE-A1- 10 319 600
- FR-A- 2 404 770
- GB-A- 2 224 317

## Beschreibung

### Stand der Technik

Aus DE 196 50 865 A1 ist ein Magnetventil zur Steuerung des Kraftstoffdruckes in einem Steuerraum eines Einspritzventiles, wie etwa eines Common-Rail-Hochdruckspeichereinspritzsystems, bekannt. Über den Kraftstoffdruck im Steuerraum wird eine Hubbewegung eines Ventilkolbens gesteuert, mit dem eine Einspritzöffnung des Einspritzventiles geöffnet oder geschlossen wird. Das Magnetventil umfasst einen Elektromagneten, einen beweglichen Anker und ein mit dem Anker bewegtes und von einer Ventilschließfeder in Schließrichtung beaufschlagtes Ventilglied, das mit dem Ventilsitz des Magnetventils zusammenwirkt und so den Kraftstoffabfluss aus dem Steuerraum steuert.

Aus der DE 103 19 600 A1 ist darüber hinaus eine Aktoreinheit für ein piezogesteuertes Kraftstoffeinspritzventil bekannt, welche einen piezoelektrischen Aktor und einen als Feder ausgebildeten Hohlkörper umfasst.

Bei bisher eingesetzten Kraftstoffinjektoren wird eine Schraubverbindung mittels einer Überwurfmutter verwirklicht, welche einen Düsenkörper, eine auf diesem aufliegende Drosselplatte sowie eine Ventilplatte eines Kraftstoffinjektors mit dem Haltekörper des Kraftstoffinjektors verbindet. Dabei ist es zunächst von untergeordneter Bedeutung, ob der Kraftstoffinjektor mittels eines Piezoaktors oder mittels eines Magnetventils betätigt wird. Im Allgemeinen kommt ein Dichtring, der bevorzugt aus PTFE gefertigt wird, zum Einsatz, um eine Abdichtung des Niederdruckbereiches des Kraftstoffinjektors nach außen zu erzielen. Zur Verbindung der Düsenspannmutter, die in der Regel einen Düsenkörper, eine Drosselplatte sowie eine Ventilplatte aufnimmt, und dem Haltekörper ist an der Innenseite der Düsenspannmutter ein Gewinde ausgebildet. Über dieses Gewinde wird die Vorspannkraft in einen Schraubverband aus Haltekörper und Düsenkörper sowie den darin eingelegten Bauteilen erreicht. Die Fertigung des Gewindes einerseits an der Innenseite der Düsenspannmutter und andererseits an der Außenumfangsfläche des Haltekörpers ist aufwändig und teuer, ferner kann es zu unerwünschter Leckage am Gewinde kommen sowie zu einer ungleichmäßig verteilten Wirkung der durch das Gewindeanzugsmoment in den Schraubverbund eingeleiteten Vorspannkraft.

Bei Kraftstoffinjektoren werden Koppler eingesetzt, welche in der Regel modulförmig ausgebildet sind und sich zwischen einem Schaltventil des Kraftstoffinjektors und einem Betätigungselement, sei es ein Magnetventil, sei es ein Piezoaktor, erstrecken. Die bei Kraftstoffinjektoren bisher eingesetzten Kopplermodule umfassen eine im Kopplermodul enthaltene offene Federhülse, welche im Betrieb hohen dynamischen Beanspruchungen unterliegt und deshalb sehr robust sein muss.

Bisherige Ausführungsvarianten einer im Kopplermodul eingesetzten Federhülse umfassen ringförmig angeordnete Aussparungen, die in wechselweise angeordnet liegenden Lochungsmustern verlaufen. Die Federhülse wird zum Beispiel als offene Federhülse ausgelegt und umfasst zwei unterschiedliche Stempelgeometrien, über welche bewirkt wird, dass die offene Federhülse bei axialer Beanspruchung querkraftfrei bleibt.

Im Injektorbetrieb treten einzelne Differenzwege d₁ bis d₇ auf, die sich bei dynamischer Beanspruchung gegenüber statischer Beanspruchung voneinander unterscheiden. Diese variieren in der zeitlichen Abfolge. Bei statischer Last sind die Differenzwege d₁ bis d₇ gleich groß und entsprechen jeweils einem Bruchteil der gesamten Länge der Federlänge.

Die Differenzwege und die damit zusammenhängende lokale dynamische Beanspruchung ist im Randbereich der zum Beispiel offen ausgebildeten Federhülse deutlich höher und nimmt zu deren Mitte hin ab, Durch eine optimierte Gestaltung der in der Regel offen ausgebildeten Federhülse kann die Robustheit, d. h. die Anzahl der beschädigungsfrei durchlaufenen Lastspiele, gesteigert werden.

### Offenbarung der Erfindung

Erfindungsgemäß wird eine offene Federhülse vorgeschlagen, die eine höhere Robustheit angesichts der dynamischen Beanspruchung beim Betrieb eines Kraftstoffinjektors aufweist. Die erfindungsgemäß vorgeschlagene Federhülse verfügt über zwei unterschiedliche Aussparungsgeometrien, die in der Mantelfläche der Federhülse, die als Hohlzylinder ausgebildet ist, ausgebildet sind, um die Querkraftfreiheit bei axialer Beanspruchung sicherzustellen.

Im Injektorbetrieb sind einzelne Differenzwege d₁ bis d₇ der erfindungsgemäß vorgeschlagenen Federhülse bei dynamischer Beanspruchung im Vergleich zu statischer Beanspruchung in zeitlicher Abfolge zum Beispiel höher und variieren zusätzlich untereinander. Bei statischer Beanspruchung der erfindungsgemäß vorgeschlagenen offenen Federhülse sind die einzelnen Differenzwege d₁ bis d₇ gleich groß und entsprechen jeweils 1/7 einer gesamten Länge d_{ges} der erfindungsgemäß vorgeschlagenen, offen ausgebildeten Federhülse.

Die Differenzwege und damit die lokale dynamische Beanspruchung der erfindungsgemäß vorgeschlagenen, offen ausgebildeten Federhülse ist im Randbereich höher und nimmt zu deren Mitte hin ab. Durch die erfindungsgemäß vorgeschlagene optimierte Gestaltung der offenen Federhülse kann dementsprechend die Robustheit der Federhülse gesteigert werden, so dass diese insbesondere im Randbereich einer höheren lokalen Beanspruchung standhält. Dadurch können Lastspielzahlen > 1,2 x 10⁹ Lastwechsel durchgeführt werden, ohne dass das Bauteil beim Betrieb des Kraftstoffinjektors Schaden nimmt.

Erfindungsgemäß wird vorgeschlagen, die mechanische Beanspruchung der offen ausgebildeten Federhülse in Längsrichtung homogener zu gestalten. Dazu kann entweder die Wanddicke der erfindungsgemäß vorgeschlagenen Federhülse in Längsrichtung variiert werden, oder die Aussparungsgeometrie der in der Mantelfläche der Federhülse ausgebildeten Aussparungen kann variiert werden.

Gemäß der erfindungsgemäß vorgeschlagenen Lösung kann eine Variation der Wanddicke des Materials der offen ausgebildeten Federhülse vorgenommen werden. Bevorzugt wird eine Variation der Wanddicke der erfindungsgemäß vorgeschlagen offen ausgebildeten Federhülse in Längsrichtung vorgenommen, wobei der Innendurchmesser der offenen Federhülse oder der Außendurchmesser der offen ausgebildeten Federhülse variieren kann. Möglich ist auch eine Variation von Innen- und Außendurchmesser der Federhülse. Bevorzugt wird die Variation der Wanddicke so gestaltet, dass zwischen minimaler und maximaler Wanddicke, des Materials der offen ausgebildeten Federhülse eine Differenz von etwa 20 % herrscht.

Durch die höhere Wanddicke im Randbereich der Federhülse, d. h. an deren oberem beziehungsweise an deren unterem Ende bei konvexer oder konkav verlaufender Variation der Wanddicke sind dort, d. h. an der oberen Stirnseite beziehungsweise an der unteren Stirnseite der offen ausgebildeten Federhülse, die lokalen Verformungen bei dynamischer Beanspruchung und folglich die resultierenden Spannungen geringer. Bevorzugt wird die Variation der Wanddicke derart eingestellt, dass diese im Mittel der Wanddicke bei einer konstanten Wanddicke über die Längsrichtung entspricht, damit sich die Gesamtsteifigkeit, d.h. die Federrate der erfindungsgemäß vorgeschlagenen offenen Federhülse nicht verändert. Die erfindungsgemäß vorgeschlagene Federhülse wird zum Beispiel am Kopplerkörper eines Kopplermoduls eines Kraftstoffinjektors eingesetzt und dient der Rückstellung des Kopplermoduls bei Aufhebung der Bestromung eines Betätigungsorganes des Kraftstoffinjektors, sei es ein Piezoaktor, sei es ein Magnetventil. Die erfindungsgemäß vorgeschlagene Federhülse erfüllt zwei Funktionen. Zunächst dient sie der Rückstellung des Kopplermoduls, insbesondere des Kopplerkolbens und zweitens übt die Federhülse aufgrund ihrer statischen Vorspannung eine Vorspannkraft (Druckkraft) auf einen Piezoaktor aus.

Anstelle einer Variation der Wanddicke der offen ausgebildeten Federhülse kann abhängig von der Längsrichtung eine Modifikation der Ausbildung von Aussparungen in der Mantelfläche der offen ausgebildeten Federhülse vorgenommen werden. In der offen ausgebildeten Federhülse, deren aneinander anstoßende Enden eine Trennfuge bilden, wird eine erste Aussparungsgeometrie und eine zweite Aussparungsgeometrie in alternierender Abfolge ausgebildet. Die erste wie die zweite Aussparungsgeometrie können in Abhängigkeit von der Längsrichtung der offen ausgebildeten Federhülse hinsichtlich ihrer Breite in Bezug auf eine erste Aussparungsgeometrie zwischen einer ersten Breite S_{1,min} und S_{1,max} und hinsichtlich einer zweiten Aussparungsgeometrie hinsichtlich einer minimalen Breite S_{2,min} und einer maximalen Breite S_{2,max} ausgebildet werden.

Bei der Variation der Aussparungsgeometrie abhängig von der Längsrichtung beträgt die Breite sowohl der ersten Aussparungsgeometrie als auch der zweiten Aussparungsgeometrie im Randbereich der erfindungsgemäß vorgeschlagenen offen ausgebildeten Federhülse nur ca. 80 % gegenüber der Aussparungsbreite in der Mitte.

Durch die Variation der Aussparungsbreite abhängig von der Längsrichtung wird die erfindungsgemäß vorgeschlagene, offen ausgebildete Federhülse im Randbereich versteift, wodurch die lokalen Verformungen dort dementsprechend geringer ausfallen.

Die Folge ist eine homogenere Beanspruchung der offen ausgebildeten Federhülse bei dynamischer Last während des Betriebes des Kraftstoffinjektors. Um die Gesamtsteifigkeit, d.h. die Federrate der offen ausgebildeten Federhülse nicht zu verändern, ist dafür Sorge zu tragen, dass die mittlere Aussparungsbreite beziehungsweise die mittlere Wandstärke gemäß der ersten Ausführungsform ca. dem Wert der Breite der Aussparungen bei konstanter Aussparungsbreite sowohl der ersten Aussparungsgeometrie als auch der zweiten Aussparungsgeometrie entspricht.

### Kurze Beschreibung der Zeichnungen

Anhand der Zeichnung wird die Erfindung nachstehend eingehender beschrieben.

Es zeigt:
- Figur 1: einen Schnitt durch einen Kraftstoffinjektor, in dessen Haltekörper ein Kopplermodul mit einer Federhülse gemäß des Standes der Technik aufgenommen ist,
- Figur 2: eine perspektivische Darstellung des Oberteils einer bekannten Federhülse,
- Figur 3: ein Längsschnitt durch die in Figur 2 teilweise dargestellte; offen ausgebildete Federhülse,
- Figuren 4.1, 4.2 und 4.3: jeweils Teilschnitte durch Ausführungsformen der erfindungsgemäß vorgeschlagenen Federhülse mit konstantem Innen- und Außendurchmesser, mit variierendem Innendurchmesser und variierendem Außendurchmesser und
- Figur 5: eine Abwicklung einer Federhülse mit in Längsrichtung variierender Breite von Aussparungen einer ersten Aussparungsgeometrie und einer zweiten Aussparungsgeometrie, die in der Mantelfläche der offenen Federhülse ausgebildet sind.

### Ausführungsformen

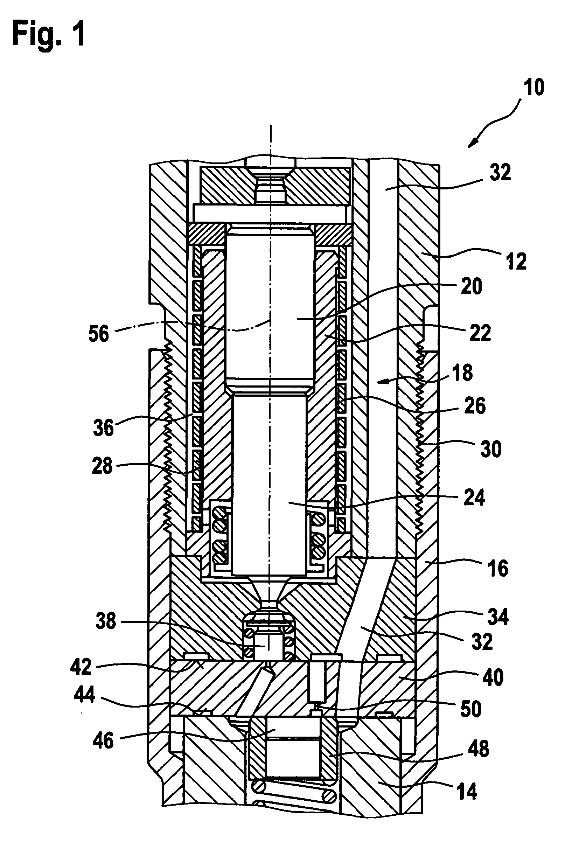

Der Darstellung gemäß Figur 1 ist ein Schnitt durch einen Kraftstoffinjektor gemäß des Standes der Technik zu entnehmen, der ein Kopplermodul umfasst.

Der Darstellung gemäß Figur 1 ist ein Kraftstoffinjektor 1-0 zu entnehmen, der einen Haltekörper 12 und einen Düsenkörper 14 umfasst. Der Haltekörper 12 und der Düsenkörper 14 sind über eine Düsenspannmutter 16 miteinander verbunden. Der Haltekörper 12 weist einen Hohlraum 36 auf, in dem ein Kopplermodul 18 aufgenommen ist.

Das Kopplermodul 18 umfasst einen Kopplerkolben 20 sowie einen Kopplerkörper 22. Der Kopplerkörper 22 umschließt sowohl den Kopplerkolben 20 als auch einen Kolben 24, auf den der Kopplerkolben 20 wirkt. Eine Mantelfläche 28 des Kopplerkörpers 22 ist von einer Federhülse 26 umschlossen.

Aus der Schnittdarstellung gemäß Figur 1 geht hervor, dass der Haltekörper 12 und der Düsenkörper 14 unter Zwischenschaltung einer Ventilplatte 34 und einer Drosselplatte 40 an einer Verschraubung 30 miteinander verbunden sind. Sowohl durch den Haltekörper 12 als auch die Ventilplatte 34 und die Drosselplatte 40 erstreckt sich ein Zulauf 32, in dem unter Systemdruck stehender Kraftstoff ansteht, mit dem der Kraftstoffinjektor 10 beaufschlagt ist.

Über das Kopplermodul 18 sind ein in der Darstellung gemäß Figur 1 nicht näher dargestelltes Betätigungsorgan des Kraftstoffinjektors 10, sei es ein Magnetventil, sei es ein Piezoaktor, und ein Schaltventil 38 miteinander wirkverbunden. Über das Kopplermodul 18 wird eine Hubbewegung, die vom Betätigungsorgan, sei es ein Piezoaktor, sei es ein Magnetventil, ausgeführt wird, in eine Schaltbewegung am Ventil 38 umgewandelt.

Der Schnittdarstellung gemäß Figur 1 ist darüber hinaus zu entnehmen, dass das Ventil 38 in der Ventilplatte 34 ausgebildet ist. Unter der Ventilplatte 34 befindet sich die durch Bezugszeichen 40 identifizierte Drosselplatte, deren erste Stirnseite mit Bezugszeichen 42 und deren zweite Stirnseite mit Bezugszeichen 44 identifiziert ist. Die zweite Stirnseite 44 der Drosselplatte 40 weist einem Steuerraum 46 zu, der seinerseits über eine Steuerraumhülse 48 begrenzt ist. Die Steuerraumhülse 48 ist über ein Federelement an die zweite Stirnseite 44 der Drosselplatte 40 angestellt. Bezugszeichen 50 bezeichnet eine Zulaufdrossel, über welche der Steuerraum 46 des Kraftstoffinjektors über den Zulauf 32, der sich durch den Haltekörper 12, die Ventilplatte 34 und die Drosselplatte 40 erstreckt, mit unter Systemdruck stehendem Kraftstoff beaufschlagt ist.

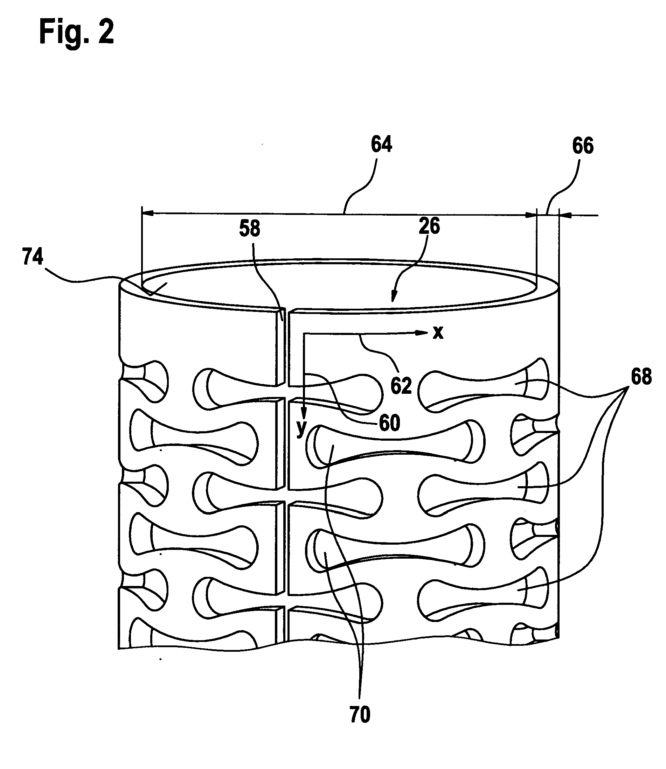

Figur 2 zeigt eine perspektivische Darstellung des oberen Bereiches der Federhülse.

Die Federhülse 26 gemäß der Darstellung in Figur 2 ist - wie in Figur 1 dargestellt - an der Mantelfläche des Kopplerkörpers 22 aufgenommen. Die Federhülse 26 bewirkt eine Rückstellung des Kopplerkölbens 20 und des Kolbens 24 des Kopplermoduls 18 relativ zueinander, sobald die Bestromung des Betätigungsorganes zur Betätigung des Kraftstoffinjektors 10, d. h. zur Druckentlastung von dessen Steuerraum 46, aufgehoben wird. Die Federhülse 26 ist hohen mechanischen Beanspruchungen ausgesetzt und erfährt im Betrieb des Kraftstoffinjektors 10 in der Größenordnung von 1,2 x 10⁹ Lastspiele.

Die in Figur 2 in teilweiser perspektivischer Darstellung wiedergegebene Federhülse 26 umfasst eine Fuge 58. Entlang der Fuge 58 liegen einander zuweisende Enden des Materials der Federhülse 26 einander gegenüber, ohne sich zu berühren. Die Umfangsrichtung am Mantel der Federhülse 26 ist durch Bezugszeichen 62 (x-Richtung), die Längsrichtung am Mantel der erfindungsgemäß vorgeschlagenen Federhülse 26 ist durch Bezugszeichen 60 (y-Richtung) kenntlich gemacht. Die in der Darstellung gemäß Figur 2 dargestellte Federhülse 26 weist einen Innendurchmesser Dᵢ, vergleiche Bezugszeichen 64, auf. Eine Wanddicke der Federhülse 26 gemäß der Darstellung in Figur 1 ist durch Bezugszeichen 66 (Maß t₀) gekennzeichnet.

Aus der perspektivischen Darstellung des oberen Bereiches der in Figur 2 wiedergegebenen Federhülse 26 geht hervor, dass im Material, d. h. der Mantelfläche der Federhülse 26, eine erste Aussparungsgeometrie 68 und eine zweite Aussparungsgeometrie 70 ausgeformt sind. Aussparungen der ersten Aussparungsgeometrie 68 und Aussparungen in der zweiten Aussparungsgeometrie 70 sind in einer versetzten Anordnung 72 zueinander im Material der Federhülse 26 ausgebildet. Die Aussparungen der ersten Aussparungsgeometrie 68 unterscheiden sich von Aussparungen, die in der zweiten Aussparungsgeometrie 70 ausgebildet sind, durch eine größere Breite S₁ im Vergleich zur Breite S₂ der Aussparungen der zweiten Aussparungsgeometrie 70. Mit Bezugszeichen 74 ist die Oberseite der erfindungsgemäß vorgeschlagenen Federhülse 26 bezeichnet, die eine Fuge 58 aufweist, die sich in Längsrichtung 60 in y-Richtung erstreckt.

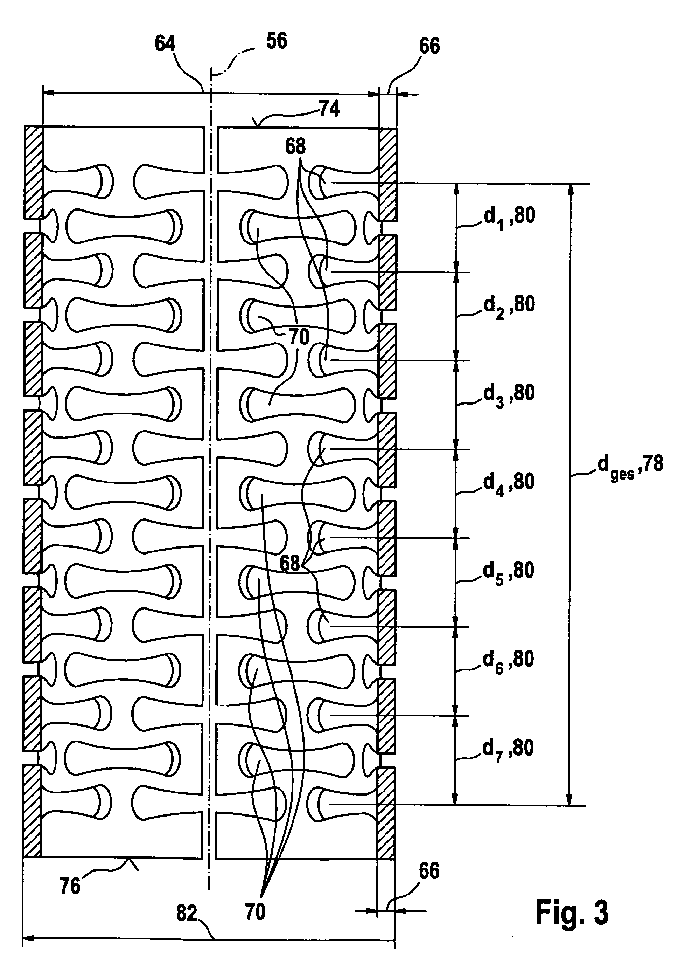

Figur 3 zeigt einen Schnitt durch eine Federhülse mit konstantem Innendurchmesser sowie konstantem Außendurchmesser.

Aus der Darstellung gemäß Figur 3 geht hervor, dass die symmetrisch zur Mittellinie 56 ausgeführte, die Trennfuge 58 aufweisende Federhülse 26 die Oberseite 74 aufweist sowie eine Unterseite 76. Die konstante Dicke der Mantelfläche der offen ausgebildeten, d. h. die Trennfuge 58 aufweisenden Federhülse 26 ist durch Bezugszeichen 66 bezeichnet und im Maß t₀ ausgebildet.

Beim Betrieb des Kraftstoffinjektors, d. h. beim Betrieb des Kopplermoduls 18 (vergleiche Figur 1-), stellen sich einzelne Differenzwege 80 ein, die in der Darstellung gemäß Figur 3 mit d₁ bis d₇ bezeichnet sind. Die einzelnen Differenzwege d₁ bis d₇ sind bei dynamischer Beanspruchung der erfindungsgemäß vorgeschlagenen Federhülse 26 hinsichtlich ihrer zeitlichen Abfolge unregelmäßig und variieren zusätzlich untereinander. Bei statischer Last sind die Differenzwege - wie in Figur 3 angedeutet - d₁ bis d₇ gleich groß und entsprechen jeweils 1/7 des Maßes 78, d. h. dem Gesamtweg d_{ges}. Aus Figur 3 geht hervor, dass sich die jeweiligen Differenzwege 80 d₁ bis d₇ jeweils von einer Reihe von Aussparungen, die in der ersten Aussparungsgeometrie 68 ausgebildet sind, zur nächsten Reihe von Aussparungen, die ebenfalls in der ersten Aussparungsgeometrie 68 ausgebildet sind, erstrecken. Die dazwischen liegende Reihe von Aussparungen, die in der zweiten Aussparungsgeometrie 70 ausgebildet ist, wird übersprungen.

Die Differenzwege und damit die lokale dynamische Beanspruchung sind im Randbereich, d.h. die erste und lezte Aussparungsreihe der erfindungsgemäß vorgeschlagenen Federhülse 26, gesehen in Längsrichtung, höher und nehmen zur Mitte der Federhülse 26 hin ab.

Der Darstellung gemäß der Figurensequenz 4.1 bis 4.3 sind Ausführungsformen der erfindungsgemäß vorgeschlagenen, offen ausgebildeten Federhülse 26 zu entnehmen, deren Wanddicke in Abhängigkeit von der Längsrichtung (y-Richtung) variiert.

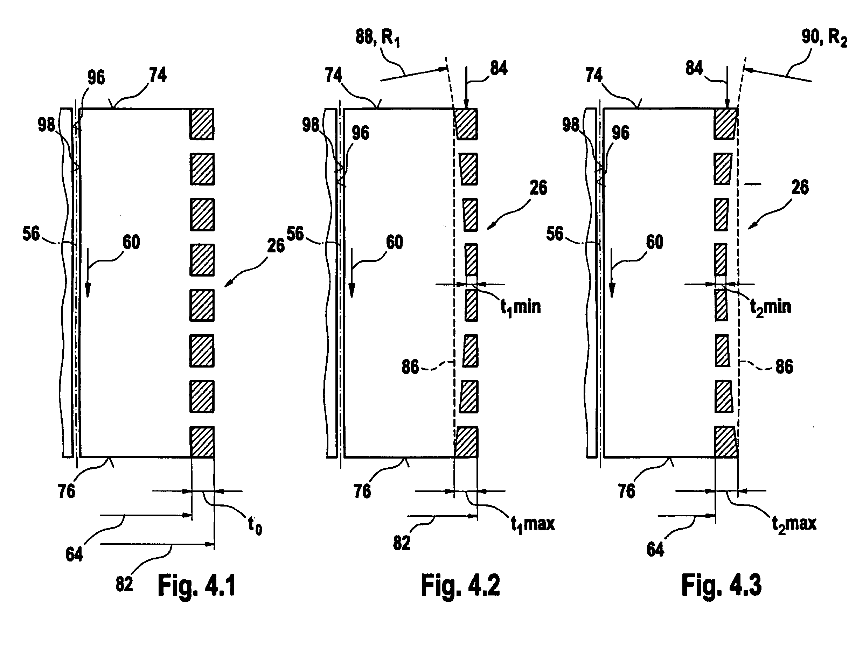

Der Darstellung gemäß Figur 4.1 ist entnehmbar, dass die dort im Teilschnitt dargestellte Federhülse 26 eine solche ist, deren erste Stoßkante 96 von einer zweiten Stoßkante 98 durch eine Trennfuge 58 getrennt ist. Wie aus der Schnittdarstellung gemäß Figur 4.1 hervorgeht, ist die Wanddicke 66 der Federhülse 26 gemäß Figur 4.1 konstant, d. h. die Federhülse 26 weist einen konstanten Innendurchmesser 64 D₁ sowie einen konstanten, in Bezug auf die Längsrichtung 60 (y-Richtung) konstant verlaufenden Außendurchmesser 82 Dₐ auf. Der Vollständigkeit halber sei erwähnt, dass die Oberseite der Federhülse 26 mit Bezugszeichen 74 identifiziert ist, während die Unterseite der Federhülse 26 gemäß der Schnittdarstellung in Figur 4.1 mit Bezugszeichen 76 bezeichnet ist.

Figur 4.2 ist eine Ausführungsform der erfindungsgemäß vorgeschlagenen offenen Federhülse zu entnehmen, deren Außendurchmesser konstant ist und deren Innendurchmesser über die Längsrichtung variiert.

Wie aus der Schnittdarstellung gemäß Figur 4.2 hervorgeht, handelt es sich bei der dort dargestellten Federhülse 26 ebenfalls um eine Federhülse, deren Stoßkanten 96, 98 entlang einer Fuge 58 einander gegenüberliegen, ohne einander zu berühren. Es sei erwähnt, dass in der Figurensequenz der Figuren 4.1, 4.2, 4.3 das Aussparungsmuster, vergleiche Aussparungen in der ersten Aussparungsgeometrie 68 und der zweiten Aussparungsgeometrie 70 gemäß der Darstellung in Figur 3, aus Gründen der zeichnerischen Vereinfachung nicht dargestellt ist.

Wie Figur 4.2 weiterhin entnommen werden kann, erfolgt eine Variation 84 der Wanddicke 66 der Federhülse 26 in y-Richtung 60, d. h. in Längsrichtung. Um dieses zu verdeutlichen, ist in der Darstellung gemäß Figur 4.2 eine Bezugslinie 86 gestrichelt eingezeichnet. Da der Außendurchmesser 82 (Dₐ) konstant ist, wird die Variation des Innendurchmessers Dᵢ durch einen inneren Radius R₁, vergleiche Bezugszeichen 88, dargestellt. Bewirkt durch den Verlauf der Krümmung des inneren Radius' 88, R₁, nimmt die variierende Wanddicke 84 der in Figur 4.2 dargestellten Federhülse 26 in der Mitte, d. h. äquidistant zur Oberseite 74 und zur Unterseite 76, eine minimale Wanddicke t_{1,min} an und weist im Bereich der Oberseite 74 beziehungsweise der Unterseite 76 eine maximale Wanddicke t_{1,max} auf. Die Maße t_{1,min} und t_{1,max} beziehen sich auf einen variablen Innendurchmesser D₁.

Analog zur Darstellung gemäß Figur 4.2 ist in der Darstellung gemäß Figur 3 eine erfindungsgemäß vorgeschlagene Federhülse dargestellt, bei der der Innendurchmesser Dᵢ konstant gehalten ist und der Außendurchmesser in Längsrichtung variabel ausgebildet ist.

In der Darstellung gemäß Figur 4.2 ist der Innendurchmesser der Hülse 26 Dᵢ, vergleiche Bezugszeichen 64 zwischen Oberseite 74 und Unterseite 76, konstant. Die in der Darstellung gemäß Figur 4.3 dargestellte Federhülse 26 ist ebenfalls eine solche, bei der die Stoßkanten der Mantelfläche 96, 98 im Bereich der Fuge 58 einander gegenüberliegen, ohne einander zu berühren.

Die Variation der Wanddicke 84 erfolgt in der Ausführungsform gemäß Figur 4.3 durch einen Außenradius 90, vergleiche R₂, so dass die variierende Wanddicke 84 im Bereich der Mitte der Federhülse 26 im Minimum t_{2,min} und im Bereich jeweils der Oberseite 74 beziehungsweise der Unterseite 76 der Federhülse 26 ihr Maximum t_{2,max} annimmt. An den beiden in Figuren 4.2 und 4.3 dargestellten Ausführungsformen der erfindungsgemäß vorgeschlagenen Federhülse 26 kann zwischen minimaler Wanddicke t_{1,min} sowie t_{2,min} und maximaler Wanddicke t_{1,max} und t_{2,max} eine Differenz von ca. 20 % ausgebildet werden. Durch die höhere Wanddicke im Randbereich, d. h. im Bereich der Oberseite 74 und im Bereich der Unterseite 76 in Bezug auf die Längsrichtung 60 der Federhülse 26, sind dort die lokalen Verformungen bei dynamischer Beanspruchung der erfindungsgemäß vorgeschlagenen Federhülse 26 und folglich die resultierenden Spannungen erheblich geringer. Die Variation 84 der Wanddicke wird vorgenommen, so dass im Mittel die Wanddicke ca. dem Wert bei konstanter Wanddicke 66 (Maß t₀) entspricht, damit sich die Gesamtsteifigkeit, d. h. die Federrate der erfindungsgemäß vorgeschlagenen offen ausgebildeten Federhülse 26 nicht verändert.

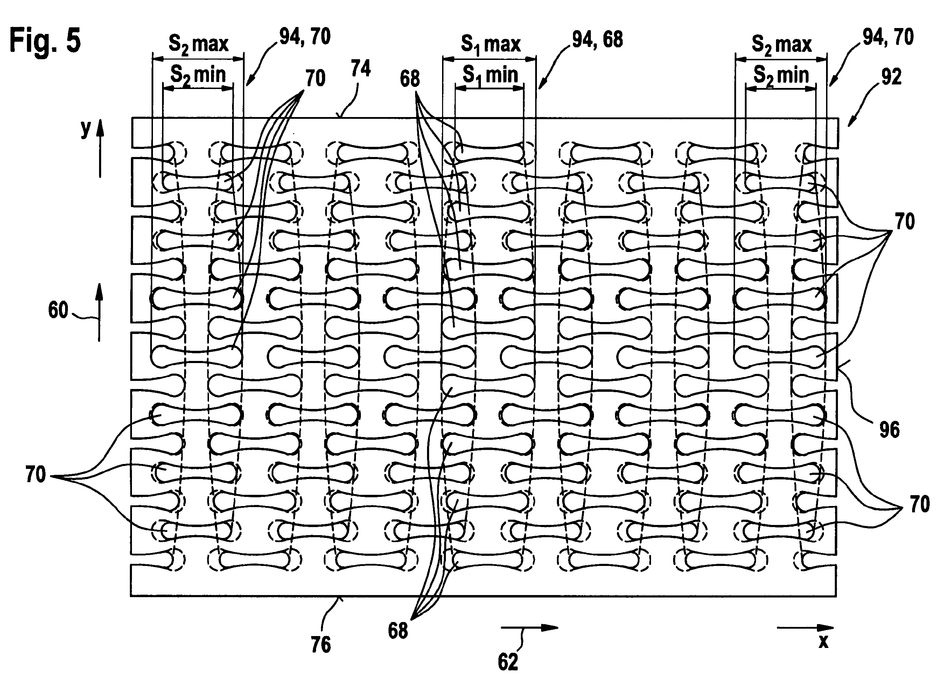

Figur 5 zeigt in abgewickelter Form eine weitere Ausführungsform der erfindungsgemäß vorgeschlagenen optimiert ausgebildeten Federhülse.

Aus der Darstellung gemäß Figur 5 geht hervor, dass eine abgewickelte Mantelfläche 92 der Federhülse 26 ein etwa rechteckförmiges Aussehen hat. Die in Figur 5 abgewickelt dargestellte Federhülse 26 weist in Längsrichtung 60 (y-Richtung) eine Anzahl von Reihen von Aussparungen auf, die alternierend in der ersten Aussparungsgeometrie 68 und in der zweiten Aussparungsgeometrie 70 ausgebildet sind. In Umfangsrichtung 62 (x-Richtung) liegen die Aussparungen in der ersten Aussparungsgeometrie 68 beziehungsweise der zweiten Aussparungsgeometrie 70 in Umfangsrichtung gesehen hintereinander.

Aus der Darstellung gemäß Figur 5 lässt sich entnehmen, dass Aussparungen einer zweiten Aussparungsgeometrie 70 im Bereich der zweiten Stoßkante 98 sowie die dieser gegenüberliegenden Aussparungen der zweiten Aussparungsgeometrie 70 an der ersten Stoßkante 96 der Mantelfläche der Federhülse 26 einen breiten Verlauf 94 aufweisen, der abhängig von der Längsrichtung 60 ist. Dies bedeutet, dass die Breite der Aussparungen in der zweiten Aussparungsgeometrie 70 an der ersten Stoßkante 96 und der zweiten Stoßkante 98 ausgehend von der in der Mitte vorliegenden maximalen Breite S_{2,max} in Richtung auf den Randbereich, d. h. in Richtung auf die Oberseite 74 und in Richtung auf die Unterseite 76 auf eine minimale Breite S_{2,min} zurückgenommen wird.

Analog verhält es sich zu den Aussparungen, die in der ersten Aussparungsgeometrie 68 angeordnet sind. Dort ist ebenfalls ein variabler Breitenverlauf 94 als Funktion der Längsrichtung 60 (y-Richtung) vorgesehen, in dem ausgehend von der Mitte der abgewickelten Federhülse 92 die Breite der Aussparungen von einer maximalen Aussparungsbreite S_{1,max} zu einer minimalen Aussparungsbreite S_{1,min} im Bereich der Oberseite 74 und der Unterseite 76 der Federhülse 26 übergeht.

Die Länge der Aussparungen, seien es die Aussparungen in der ersten Aussparungsgeometrie 68, seien es die Aussparungen in der zweiten Aussparungsgeometrie 70, betragen im Randbereich nur ca. 80 % gegenüber der Breite der Aussparungen, die in der Mitte der abgewickelten Federhülse 92 liegen. Der Randbereich ist der Bereich der Stirnflächen, d.h. von Oberseite 74 und Unterseite 76, jeweils einschließlich der ersten und letzten Aussparungsreihen. Nur in den Bereichen, wo Aussparungen ausgebildet sind, treten merkliche Verformungen auf. Im Bereich von der ersten bzw. letzten Aussparungsreihe bis zur Stirnfläche ist die Verformung in Längsrichtung gesehen relativ gering.

Dadurch erfolgt eine Versteifung der erfindungsgemäß vorgeschlagenen Federhülse 26 im Randbereich, d. h. im Bereich der Oberseite 74 und im Bereich der Unterseite 76, da dort die Breite der Aussparungen, seien sie in der ersten Aussparungsgeometrie 68 ausgebildet, seien sie in der zweiten Aussparungsgeometrie 70 ausgebildet, geringer ist als in der Mitte der abgewickelten Federhülse 92, in der die jeweiligen Maxima S_{1,max} und S_{2,max} der Aussparungen beider Aussparungsgeometrien 68, 70 vorliegen.

Infolgedessen ist eine wesentlich homogenere mechanische Beanspruchung der erfindungsgemäß vorgeschlagenen Federhülse 26 bei dynamischer Last im Betrieb des Kraftstoffinjektors 10 zu realisieren. Um die Gesamtsteifigkeit, d. h. die Federrate der Federhülse 26 gemäß der zweiten Ausführungsform, die in Figur 5 dargestellt ist, beizubehalten, ist anzustreben, dass die mittlere Aussparungsbreite S₁ beziehungsweise S₂ dem Wert entspricht, der bei einer konstanten Aussparungsbreite der Aussparungen der ersten und zweiten Aussparungsgeometrie 68, 70 im Material der Federhülse 26 entspricht.

## Patentansprüche

1. Kraftstoffinjektor (10) mit einem Haltekörper (12) und einem Düsenkörper (14), die miteinander gefügt sind und ein Kopplermodul (18) aufnehmen, dessen Kopplerkörper (22) von einer Federhülse (26) umschlossen ist, wobei die Federhülse (26) in Umfangsrichtung (62) offen (58) ist und ihre Wanddicke (84) in Längsrichtung (60) variiert, und die Federhülse (26) symmetrisch zu einer Mittellinie (56) ausgeführt ist und eine Oberseite 74 sowie eine Unterseite (76) aufweist, **dadurch gekennzeichnet, dass** die Federhülse (26) zwischen Oberseite (74) und Unterseite (76) eine minimale Wanddicke (t_{1,min}, t_{2,min}) annimmt und im Bereich der Oberseite (74) beziehungsweise der Unterseite (76) eine maximale Wanddicke (t_{1,max}, t_{2,max}).

2. Kraftstoffinjektor (10) gemäß Anspruch 1, **dadurch gekennzeichnet, dass** eine erste Stoßkante (96) und eine zweite Stoßkante (98) der Federhülse (26) im Bereich einer Fuge (58) einander gegenüberliegen, ohne einander zu kontaktieren.

3. Kraftstoffinjektor (10) gemäß Anspruch 1, **dadurch gekennzeichnet, dass** in der Federhülse (26) in versetzter Anordnung (72) in Ringform eine Anzahl Aussparungen in einer ersten Aussparungsgeometrie (68) und einer zweiten Aussparungsgeometrie (70) ausgebildet sind.

4. Kraftstoffinjektor (10) gemäß Anspruch 3, **dadurch gekennzeichnet, dass** die Aussparungen der ersten Aussparungsgeometrie (68) und die der zweiten Aussparungsgeometrie (70) im Wesentlichen knochenförmig ausgebildet sind.

5. Kraftstoffinjektor gemäß Anspruch 1, **dadurch gekennzeichnet, dass** eine Variation (84) der Wanddicke der Federhülse (26) bei konstantem Außendurchmesser (82) als variable Innendurchmesserveränderung ausgebildet ist.

6. Kraftstoffinjektor gemäß Anspruch 1, **dadurch gekennzeichnet, dass** zwischen minimalen Wanddicken t_{1,min}, t_{2,min} und maximalen Wanddicken t_{1,max} und t_{2,max} eine Differenz von 20 % der Wanddicke (66) vorliegt.

7. Kraftstoffinjektor (10) gemäß Anspruch 1, **dadurch gekennzeichnet, dass** Aussparungen in einer ersten Aussparungsgeometrie (68) und einer zweiten Aussparungsgeometrie (70) in Längsrichtung (60) der Federhülse (26) gesehen einen Breitenverlauf (94) aufweisen, der abhängig von der Längsrichtung (60) ist.

8. Kraftstoffinjektor gemäß Anspruch 7, **dadurch gekennzeichnet, dass** die Breite S₁, S₂ von Aussparungen der ersten Aussparungsgeometrie (68) und der zweiten Aussparungsgeometrie (70) von der Mitte der Federhülse (26) ausgehend zu den Randbereichen (74, 76) abnimmt.

9. Kraftstoffinjektor (10) gemäß Anspruch 7, **dadurch gekennzeichnet, dass** der Breitenverlauf (94) von Aussparungen einer ersten Aussparungsgeometrie (68) in Längsrichtung ausgehend von der Oberseite (74) von einer minimalen Breite S_{1,min} zu einer maximalen Breite S_{1,max} in der Mitte und in Richtung auf die Unterseite (76) der Federhülse (26) zur minimalen Breite S_{1,min} verläuft und der Breitenverlauf (94) von Aussparungen der zweiten Aussparungsgeometrie (70) ausgehend von der Oberseite (74) von einer minimalen Breite S_{2,min} zur Mitte hin zu einer maximalen Breite von S_{2,max} und in Richtung auf die Unterseite (76) der Federhülse (26) wieder auf eine minimale Breite S_{2,min} abnimmt, wobei die Breite der Aussparungen der ersten Aussparungsgeometrie (68) sowie der zweiten Aussparungsgeometrie (70) im Randbereich ca. 80 % der Breite der Aussparungen der ersten Aussparungsgeometrie (68) und der zweiten Aussparungsgeometrie (70) in der Mitte beträgt.

## Claims

1. Fuel injector (10) having a holding body (12) and a nozzle body (14) which are joined to one another and accommodate a coupler module (18), the coupler body (22) of which is enclosed by a spring sleeve (26), the spring sleeve (26) being open (58) in the circumferential direction (62) and its wall thickness (84) varying in the longitudinal direction (60), and the spring sleeve (26) being configured symmetrically with respect to a centre line (56) and having an upper side (74) and an underside (76), **characterized in that** the spring sleeve (26) assumes a minimum wall thickness (t_{1,min}, t_{2,min}) between the upper side (74) and the underside (76) and a maximum wall thickness (t_{1,max}, t_{2,max}) in the region of the upper side (74) and/or the underside (76).

2. Fuel injector (10) according to Claim 1, **characterized in that** a first abutting edge (96) and a second abutting edge (98) of the spring sleeve (26) lie opposite one another in the region of a joint (58), without making contact with one another.

3. Fuel injector (10) according to Claim 1, **characterized in that** a number of cut-outs are formed in a first cut-out geometry (68) and a second cut-out geometry (70) in the spring sleeve (26) in an offset arrangement (72) in annular form.

4. Fuel injector (10) according to Claim 3, **characterized in that** the cut-outs of the first cut-out geometry (68) and those of the second cut-out geometry (70) are of substantially bone-shaped configuration.

5. Fuel injector according to Claim 1, **characterized in that** a variation (84) of the wall thickness of the spring sleeve (26) is configured as a variable internal diameter change in the case of a constant external diameter (82).

6. Fuel injector according to Claim 1, **characterized in that** there is a difference of 20% of the wall thickness (66) between minimum wall thicknesses t_{1,min}, t_{2,min} and maximum wall thicknesses t_{1,max} and t_{2,max}.

7. Fuel injector (10) according to Claim 1, **characterized in that**, as viewed in the longitudinal direction (60) of the spring sleeve (26), cut-outs in a first cut-out geometry (68) and a second cut-out geometry (70) have a width profile (94) which is dependent on the longitudinal direction (60).

8. Fuel injector according to Claim 7, **characterized in that** the width S₁, S₂ of cut-outs of the first cut-out geometry (68) and the second cut-out geometry (70) decreases, starting from the centre of the spring sleeve (26) to the edge regions (74, 76).

9. Fuel injector (10) according to Claim 7, **characterized in that** the width profile (94) of cut-outs of a first cut-out geometry (68) runs in the longitudinal direction, starting from the upper side (74), from a minimum width S_{1,min} to a maximum width S_{1,max} in the centre and, in the direction of the underside (76) of the spring sleeve (26), to the minimum width S_{1,min}, and the width profile (94) of cut-outs of the second cut-out geometry (70) runs, starting from the upper side (74), from a minimum width S_{2,min} towards the centre to a maximum width of S_{2,max} and, in the direction of the underside (76) of the spring sleeve (26), decreases again to a minimum width S_{2,min}, the width of the cut-outs of the first cut-out geometry (68) and of the second cut-out geometry (70) in the edge region being approximately 80% of the width of the cut-outs of the first cut-out geometry (68) and of the second cut-out geometry (70) in the centre.

## Revendications

1. Injecteur de carburant (10) équipé d'un corps de maintien (12) et d'un corps de buse (14) placés ensemble et recevant un module de couplage (18) dont le corps de couplage (22) est entouré par une douille élastique (26), la douille élastique (26) étant ouverte (58) dans la direction circonférentielle (62) et son épaisseur de paroi (84) variant dans la direction longitudinale (60) et la douille élastique (26) étant réalisée symétriquement à une ligne médiane (56) et comportant un côté supérieur (74) ainsi qu'un côté inférieur (76), **caractérisé en ce que** la douille élastique (26) présente une épaisseur de paroi minimale (t_{1,min}, t_{2,min}) entre le côté supérieur (74) et le côté inférieur (76) et présente une épaisseur de paroi maximale (t_{1,max}, t_{2,max}) dans la zone du côté supérieur (74) ou du côté inférieur (76).

2. Injecteur de carburant (10) selon la revendication 1, **caractérisé en ce qu'**une première arête de butée (96) et une deuxième arête de butée (98) de la douille élastique (26) sont placées face à face dans la zone d'un joint (58) sans entrer en contact l'une avec l'autre.

3. Injecteur de carburant (10) selon la revendication 1, **caractérisé en ce qu'**un certain nombre d'évidements prenant une première forme d'évidement (68) et une deuxième forme d'évidement (70) prennent une forme annulaire dans la douille élastique (26) en suivant un agencement décalé (72).

4. Injecteur de carburant (10) selon la revendication 3, **caractérisé en ce que** les évidements de la première forme d'évidement (68) et ceux de la deuxième forme d'évidement (70) sont réalisés pour l'essentiel en forme d'os.

5. Injecteur de carburant selon la revendication 1, **caractérisé en ce qu'**une variation (84) de l'épaisseur de paroi de la douille élastique (26) prend la forme d'une variation variable du diamètre intérieur avec un diamètre extérieur (82) constant.

6. Injecteur de carburant selon la revendication 1, **caractérisé en ce qu'**on observe une différence d'épaisseur de paroi (66) de 20 % entre les épaisseurs de paroi minimales t_{1,min}, t_{2,min} et les épaisseurs de paroi maximales t_{1,max}, t_{2,max}.

7. Injecteur de carburant (10) selon la revendication 1, **caractérisé en ce que** les évidements de la première forme d'évidement (68) et de la deuxième forme d'évidement (70) présentent une courbe de largeur (94), vue dans la direction longitudinale (60) de la douille élastique (26), dépendant de la direction longitudinale (60).

8. Injecteur de carburant selon la revendication 7, **caractérisé en ce que** la largeur S₁, S₂ des évidements de la première forme d'évidement (68) et de la deuxième forme d'évidement (70) diminue du centre de la douille élastique (26) vers les zones de bordure (74, 76).

9. Injecteur de carburant (10) selon la revendication 7, **caractérisé en ce que** la courbe de largeur (94) des évidements d'une première forme d'évidement (68) s'étend, dans la direction longitudinale partant du côté supérieur (74), d'une largeur minimale S_{1,min} à une largeur maximale S_{1,max} au centre et en direction du côté inférieur (76) de la douille élastique (26), vers une largeur minimale S_{1,min} et **en ce que** la courbe de largeur (94) des évidements de la deuxième forme d'évidement (70) diminue, en partant du côté supérieur (74), d'une largeur minimale S_{2,min} au centre vers une largeur maximale S_{2,max} avant de diminuer de nouveau pour présenter une largeur minimale S_{2,min} en direction du côté inférieur (76) de la douille élastique (26), la largeur des évidements de la première forme d'évidement (68) ainsi que celle de la deuxième forme d'évidement (70) représentant, au centre, environ 80 % de la largeur des évidements de la première forme d'évidement (68) et de la deuxième forme d'évidement (70) dans la zone de bordure.
